Europäisches Patentamt

European Patent Office

Office européen des brevets

(19)

(11) EP 1 383 078 A1

(12) **EUROPEAN PATENT APPLICATION**

(43) Date of publication:
21.01.2004 Bulletin 2004/04

(51) Int Cl.$^7$: **G06N 1/00**

(21) Application number: 03425080.3

(22) Date of filing: 11.02.2003

(84) Designated Contracting States:
**AT BE BG CH CY CZ DE DK EE ES FI FR GB GR HU IE IT LI LU MC NL PT SE SI SK TR**
Designated Extension States:
**AL LT LV MK RO**

(30) Priority: **08.07.2002 EP 02425447**
**04.11.2002 EP 02425672**

(71) Applicant: **STMicroelectronics S.r.l.**
**20041 Agrate Brianza MI (IT)**

(72) Inventors:
• **Branciforte, Marco**
**95131 Catania (IT)**
• **Calabro', Antonino**
**89018 Villa San Giovanni (IT)**
• **Porto, Domenico**
**95123 Catania (IT)**

(74) Representative: **Pellegri, Alberto et al**
**c/o Società Italiana Brevetti S.p.A.**
**Piazza Repubblica, 5**
**21100 Varese (IT)**

(54) **Quantum gate for carrying out a Grover's quantum algorithm and a relative method of performing the interference operation of a Grover's quantum algorithm**

(57) A quantum gate for carrying out a Grover's quantum algorithm using a certain binary function (*f*) defined on a space having a vector basis of *n* qubits, comprises a superposition subsystem carrying out a superposition operation on components of input vectors for generating components of superposition vectors on a second vector basis of *n*+1 qubits, an entanglement subsystem carrying out an entanglement operation on components of said linear superposition vectors for generating components of entanglement vectors, and an interference subsystem carrying out an interference operation on components of said entanglement vectors for generating components of output vectors.

This quantum gate is capable of performing the interference operation of Grover's algorithm in an extremely fast manner by employing an adder input with signals representing even or odd components of an entanglement vector and generating a sum signal representing a weighted sum with a scale factor of the even or odd components, and an array of adders each input with a respective signal representative of an even or odd component, respectively, of an entanglement vector, and with the weighted sum signal, and generating a signal representative of an even or odd component, respectively, of an output vector as the difference between the weighted sum signal and the signal representing an even or odd component of an entanglement vector.

A method for carrying out an interference operation of a Grover's quantum algorithm is also disclosed.

**FIG. 8**

EP 1 383 078 A1

**Description**

FIELD OF THE INVENTION

The present invention relates generally to quantum algorithms and more precisely to a quantum gate for carrying out Grover's quantum algorithms with any number $n$ of qubits and a relative method for carrying out the interference operation of Grover's quantum algorithms.

BACKGROUND OF THE INVENTION

Quantum algorithms are global random searching algorithms based on the quantum mechanics principles, laws, and quantum effects. They are used for controlling a process or for processing data in a database, and more specifically to control a process and/or including search-of-minima intelligent operations.

In the quantum search, each design variable is represented by a finite linear superposition of classical initial states, with a sequence of elementary unitary steps the initial quantum state $|i\rangle$ (for the input) is manipulated such that a measurement of the final state of the system yields the correct output. Usually, three principle operators, i.e. *linear superposition (coherent states), entanglement,* and *interference,* are used in the quantum search algorithm.

A general description of quantum algorithms is contained in the European patent applications No. 02425447.6 and No. 02425672.9 in the name of the same Applicant, whose priority is claimed.

In order to better illustrate the field of application of the present invention, a detailed description of the Grover's quantum algorithm is presented.

**GROVER'S PROBLEM**

Grover's problem is so stated:

| Input | A function $f: \{0,1\}^n \to \{0,1\}$ such that $\exists x \in \{0,1\}^n:(f(x)=1 \wedge \forall y \in \{0,1\}^n:x \neq y \Rightarrow f(y)=0)$ |
|---|---|
| Problem | Find $x$ |

In Deutsch-Jozsa's algorithm there are two classes of input functions and it must be determined what class the input function belongs to. In this case the problem is in some sense identical in its form, even if it is harder because now we are dealing with $2^n$ classes of input functions (each function of the kind described constitutes a class).

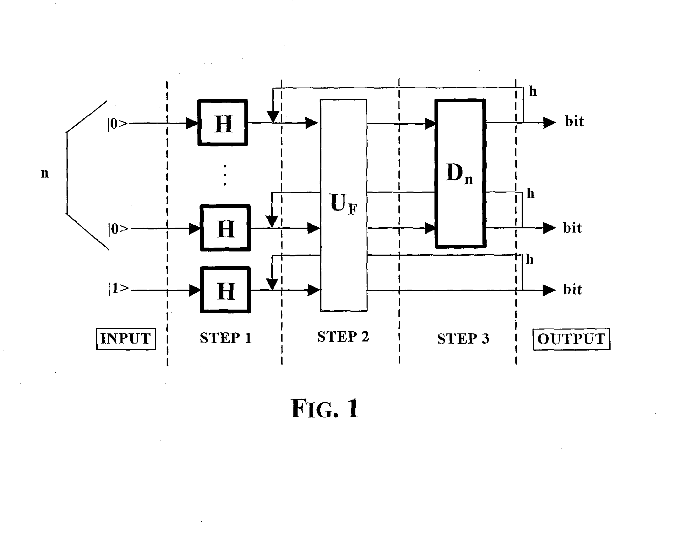

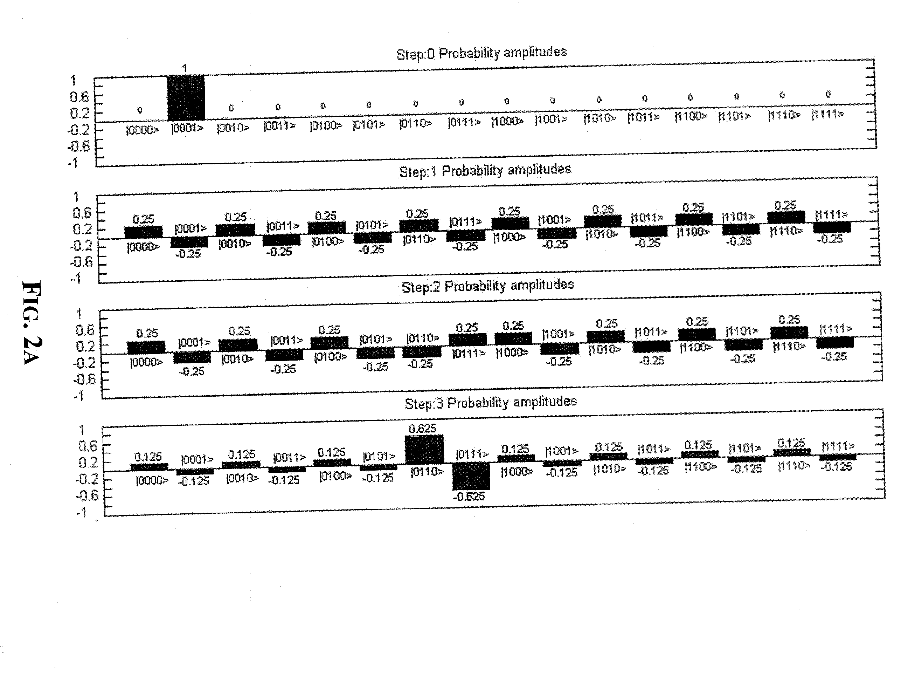

The diagram of the Grover's algorithm is depicted in Figure 1, and the gate equation is

$$\Phi = \left[ (D_n \otimes I) \cdot U_F \right]^h \cdot \left( {}^{n+1}H \right) \qquad (6)$$

Operator $D_n$ is called <u>diffusion matrix</u> of order $n$ and it is responsible of interference in this algorithm. This matrix is defined in this way:

| $D_n$ | $\|0..0>$ | $\|0..1>$ | ... | $\|i>$ | ... | $\|1..0>$ | $\|1..1>$ |
|---|---|---|---|---|---|---|---|
| $\|0..0>$ | $-1+1/2^{n-1}$ | $1/2^{n-1}$ | ... | $1/2^{n-1}$ | ... | $1/2^{n-1}$ | $1/2^{n-1}$ |
| $\|0..1>$ | $1/2^{n-1}$ | $-1+1/2^{n-1}$ | ... | $1/2^{n-1}$ | ... | $1/2^{n-1}$ | $1/2^{n-1}$ |
| ... | ... | ... | ... | ... | ... | ... | ... |
| $\|i>$ | $1/2^{n-1}$ | $1/2^{n-1}$ | ... | $-1+1/2^{n-1}$ | ... | $1/2^{n-1}$ | $1/2^{n-1}$ |
| ... | ... | ... | ... | ... | ... | ... | ... |
| $\|1..0>$ | $1/2^{n-1}$ | $1/2^{n-1}$ | ... | $1/2^{n-1}$ | ... | $-1+1/2^{n-1}$ | $1/2^{n-1}$ |
| $\|1..1>$ | $1/2^{n-1}$ | $1/2^{n-1}$ | ... | $1/2^{n-1}$ | ... | $1/2^{n-1}$ | $-1+1/2^{n-1}$ |

Grover's algorithm may be implemented in routines for searching a desired item in a set, by representing in vector form each item of the set constituting an input set of vectors, and applying a Grover's algorithm to this set of vectors: the output vector represents the desired item.

The implementation of a Grover's algorithm clearly implies the calculation of several vector products. In fact all qubits must be multiplied by the Hadamard matrix $H$, then by the entanglement matrix $U_F$ and all qubits but the latter must be multiplied by matrix $D_n$.

These multiplications could be carried out via software, but it is quite evident that the number of qubits of a quantum algorithm is very critical in terms of computational speed. In fact, referring to the scheme in Figure 1, it must be noted that the addition of only one qubit doubles the dimensions of matrices, thus the number of elements (and of products) increases exponentially.

A method of performing the superposition operation of a Grover's or of a Deutsch-Jozsa's quantum algorithm over an input set of vectors is disclosed in the European patent application 01830383.4, in the name of the same Applicant. This method exploits the fact that any rotated vector, obtained performing the Hadamard rotation $H$ (on an input vector) contemplated by the superposition operation of these quantum algorithms, can be easily encoded in a binary vector. Therefore, the successive tensor product of the rotated vectors, for generating linear superposition vectors, can be carried out by means of logic gates. This fact allows a noticeable time saving because logic gates are very fast.

However, this is not sufficient to speed up remarkably the running of these quantum algorithms because the entanglement matrix $U_F$ is a $2^{n+1} \times 2^{n+1}$ square matrix, which implies a considerable computational weight both in Grover's algorithm as well as in Deutsch-Jozsa's algorithm.

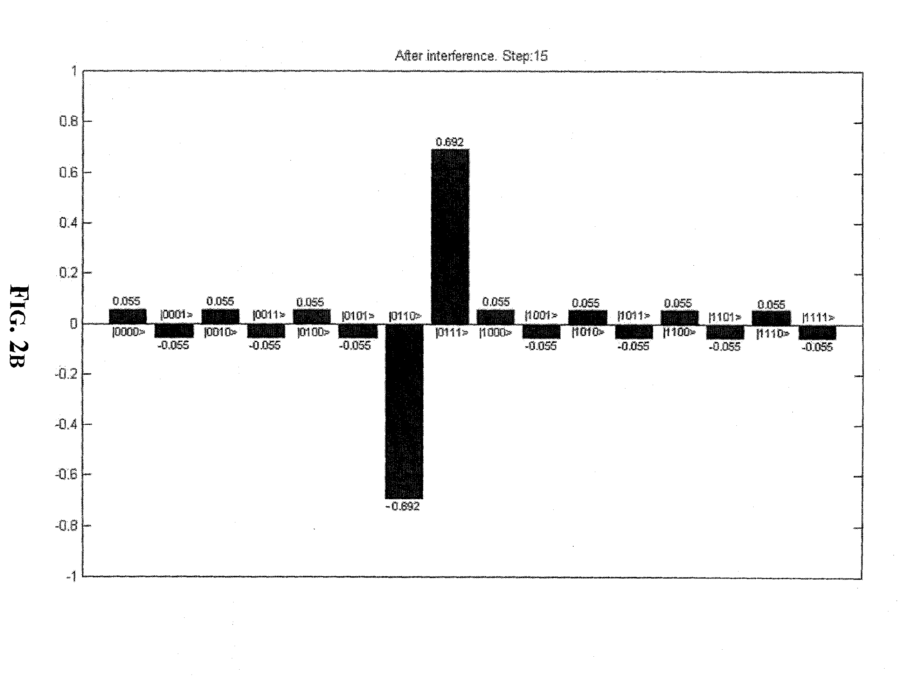

Differently from other quantum algorithms, in Grover's algorithm it is possible to iterate $h$ times the entanglement and interference operations until the best solution is reached. An example of evolution of Grover's algorithm with $n$=3 is given in Figure 2a, in which basis vector (Step 0) and superposition (Step 1), entanglement (Step 2) and interference (Step 3) output vectors are reported in order. Iterating the entanglement and interference operations produces a better distribution of probability amplitudes.

Each value is a component on the output vector referred to vectors of a basis of vectors of $n$+1 qubits. As it is possible to notice, there are couples of values of opposite sign, referred to vectors of the basis having in common the first (leftmost) $n$ qubits: for example, the values 0.625 and -0.625 are referred to vectors $|0110\rangle$ and $|0111\rangle$, respectively. Each couple of elements having opposite sign represents the probability amplitude of a certain element of the database. For the considered example, the value 0.625 is the probability of the element associated to vector $|011\rangle$ after 3 iterations ($h$=3).

The algorithm may be iterated as far as a certain quantity to be minimized, calculated in function of the components of the output vector, is smaller than a certain pre-established value. For instance, this quantity can be the Shannon entropy:

$$S(h) = -\sum_{k=1}^{2^{n+1}} \left\| q_k(h) \right\|^2 \log \left\| q_k(h) \right\|^2 \qquad (7)$$

where $q_k(h)$ is the $k$-th component of the output vector $Q$ taken after $h$ iterations.

The components of the output vector obtained after $h$=15 iterations are represented in Figure 2b. From Figure 2b it is clear that the element of the database to be found is associated to vector $|011\rangle$, and after 15 iterations the

Grover's quantum algorithm will find it with a probability of about 0.69.

From the above discussion it is evident that the great number of computations of Grover's algorithm represents a considerable burder, because multiplications by the entanglement matrix $U_F$ and the interference matrix $D_n \otimes I$ might be repeated many *(h)* times in order to produce the best result and the process may take considerable time.

OBJECT AND SUMMARY OF THE INVENTION

It has now been found and is an object of the present invention a quantum gate and a relative method for executing Grover's quantum algorithms in a very fast manner.

More precisely, an object of the present invention is a quantum gate for carrying out a Grover's quantum algorithm using a certain binary function (*f*) defined on a space having a vector basis of $n$ qubits, comprising a superposition subsystem carrying out a superposition operation on components of input vectors for generating components of superposition vectors on a second vector basis *of* $n$+1 qubits, an entanglement subsystem carrying out an entanglement operation on components of said linear superposition vectors for generating components of entanglement vectors, and an interference subsystem carrying out an interference operation on components of said entanglement vectors for generating components of output vectors.

The quantum gate of this invention is capable of performing the interference operation of Grover's algorithm in an extremely fast manner by employing:

- an adder being input with signals representing even or odd components of an entanglement vector and generating a sum signal representing a weighted sum with a scale factor of the even or odd components;
- an array of adders each being input with a respective signal, representative of an even or odd component, respectively, of an entanglement vector, and with the weighted sum signal, and generating a signal representative of an even or odd component, respectively, of an output vector as the difference between the weighted sum signal and the signal representing an even or odd component of an entanglement vector.

Another object of this invention is a method for carrying out an interference operation of a Grover's quantum algorithm comprising the steps of:

- calculating a weighted sum, with a certain scale factor, of even or odd components of an entanglement vector;
- generating each even or odd component of an output vector by subtracting from said weighted sum corresponding even or odd components, respectively, of an entanglement vector.

The invention is more precisely defined in the annexed claims.

**B**RIEF **D**ESCRIPTION OF THE **D**RAWINGS

The particular aspects and advantages of the invention will become more evident through the following description of several important embodiments and by referring to the attached drawings, wherein:

**Figure 1** is an example of a circuit realizing Grover's quantum gate;
**Figures 2a and 2b** illustrate the evolution of a Grover's quantum algorithm;
**Figure 3** is a detailed view of entanglement and interference subsystems of the quantum gate of the invention;
**Figure 4** is an embodiment of the adder HB25 of even or odd components of an entaglement vector for $n$=3 of section I-b of Figure 3;
**Figure 5** is a circuit used for realizing the adder HB25 of section I-a of Figure 3 according to a preferred modular embodiment of the quantum gate of the invention;
**Figure 6** is a preferred embodiment of the block HB25 of section I-a of Figure 3 according to a modular architecture for $n$=4;
**Figure 7** is a preferred embodiment of a single element of section I-c of Figure 3;
**Figure 8** is a view of a module and the microprocessor unit of the quantum gate of the invention;
**Figure 9** illustrates the digital circuit LOGIC of Figure 8;
**Figure 10** shows the array architecture of the inverting circuit INVERT of Figure 8;
**Figure 11** is a preferred embodiment of the inverters of Figure 8.

**D**ESCRIPTION OF **S**EVERAL **E**MBODIMENTS OF THE **I**NVENTION

A quantum gate for fast running quantum algorithm applied over a set of input vectors is disclosed in the European patent application No. 02425672.9 in the name of the same Applicant, whose priority is claimed. The quantum gate is composed of a superposition subsystem carrying out a linear superposition, an entanglement subsystem carrying out an entanglement operation and an interference subsystem carrying out an interference operation, according to the Grover's quantum algorithm.

A hardware quantum gate of this invention for performing Grover's algorithm with <u>any number of iterations,</u> is substantially composed of two parts:

Part I: (Analog) for performing a calculation step-by-step of output values. This first part is divided in the following subsections:

- I-a: Entanglement;
- I-b and I-c: Interference.

Part II: (Digital) form performing entropy evaluation, storage of vectors for iterations and output display. This part provides also the first basis of vectors.

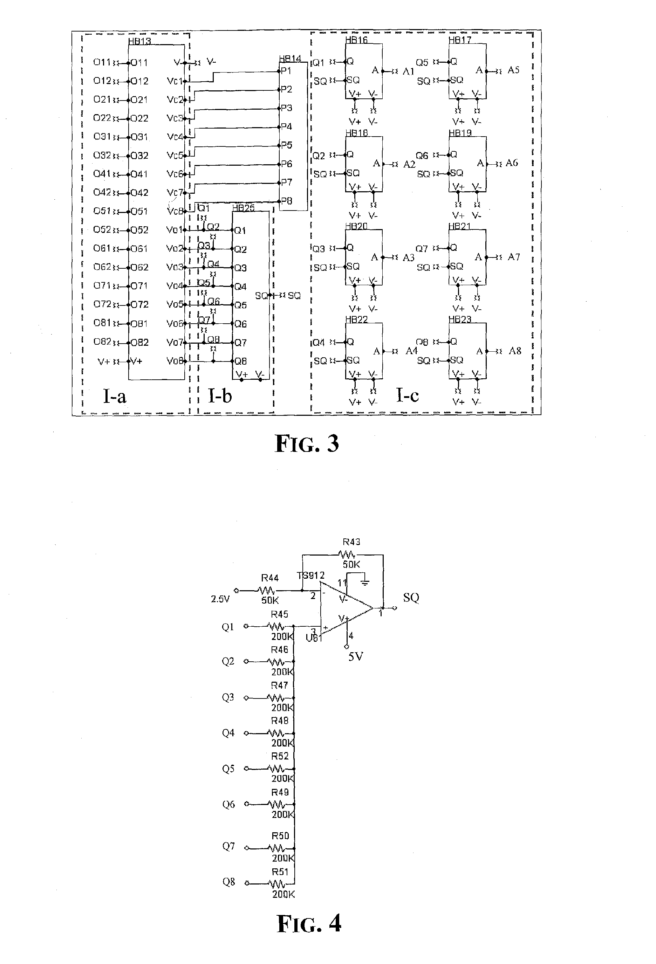

An analog part for a three-qubits quantum gate, is depicted in Figure 3.

A command circuit HB14 generates eight command signals Vc1 ..., Vc8 each representing a value of the function $f(.)$ to be processed on a respective vector of the first basis.

The entanglement subsystem, which preferably may be constituted by the command circuit HB14 and by an array of multiplexers I-a, is input with the voltage signals O11, ..., O82, representing the sixteen components of a linear superposition vector, and generates the signals Q1, ..., Q8, representing only the even or the odd components of an entanglement vector.

Let us suppose that these signals represent the odd components of an entanglement vector.

It is worth noticing that it is not necessary to calculate all components of the entanglement or output vectors, because the odd components of any vector are always opposite to the even components.

Therefore, entanglement and interference operations are carried out only on the odd components, the other components being calculated by simply inverting the first ones.

The sections I-b and I-c of a quantum gate shown in Figure 3 allow to carry out quickly the interference operation of Grover's quantum algorithm. The matrix $D_n \otimes I$ has the following properties:

- odd columns (or rows, because $D_n \otimes I$ is symmetric) have nonzero odd components and even columns have nonzero even components;
- the value of <u>all</u> nonzero components, but the $i^{th}$ component of $i^{th}$ column (diagonal elements), is $1/2^{n-1}$. The components on the up-left down-right diagonal of the matrix differ from the other nonzero components by being decreased by 1;
- being $G^*$ an entanglement vector, the output vector of the quantum algorithm $V=(D_n \otimes I)G^*$ involves <u>only</u> a weighted sum of components of $G^*$, the value $1/2^{n-1}$ depending only from the number n of qubits.

From the above analysis, the generic element $v_i$ of $V$ can be written as follows in function of components $g_i^*$ of the entanglement vector $G^*$:

$$ v_i = \begin{cases} \dfrac{1}{2^{n-1}} \displaystyle\sum_{j=1}^{2^n} g_{2j-1}^* - g_i^* & \text{for } i \text{ odd} \\[3mm] \dfrac{1}{2^{n-1}} \displaystyle\sum_{j=1}^{2^n} g_{2j}^* - g_i^* & \text{for } i \text{ even} \end{cases} \qquad (16) $$

Therefore, in order to calculate a component $v_i$ of the output vector, according to the method of the invention, it is sufficient to calculate a weighted sum of even

$$ \left( \frac{1}{2^{n-1}} \sum_{j=1}^{2^n} g_{2j}^* \right) $$

or odd

$$ \left( \frac{1}{2^{n-1}} \sum_{j=1}^{2^n} g_{2j-1}^* \right) $$

components of the entanglement vector and to subtract from the weighted sum the corresponding component $g_i^*$ of the entanglement vector.

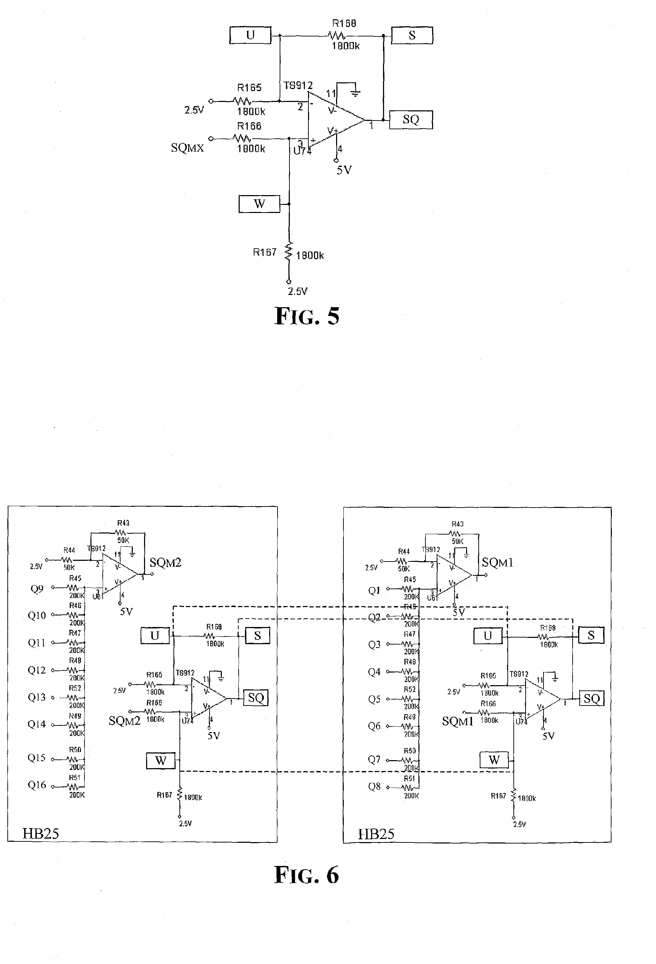

An adder HB25, which may be as detailed in Figure 4, sums these components with a certain scale factor that depends only on the number n of qubits (which is 0.25 for n=3), generating a signal SQ representing the sum of the odd (or even) components of the entanglement vector. The reference voltage of this adder is 2.5V, such to make the voltage signal representing the scaled sum SQ range between [0÷5]Volts, which is the voltage range of the signals in the digital Part II of the quantum gate.

The hardware structure of such a quantum gate must be designed for a pre-established number n of qubits and it is usable for handling vectors having a different number of qubits. In fact the adder of Figure 4 is specifically designed for a certain number $n$ of qubits (in the considered example $n$=3).

This lack of flexibility is overcome by realizing a quantum gate composed of a plurality of interconnected modules.

Each module comprises an adder HB25 having a voltage buffer with an operational amplifier, and the amplifiers of the voltage buffers of all modules are connected in parallel. Basically each voltage buffer is composed of an operational amplifier, a resistor coupling an input of the amplifier to a node at a voltage to be summed and scaled, and a feedback resistor connected between an input and an output of the amplifier.

A sample embodiment of such a voltage buffer is that of Figure 5. The resistors may have different values from that of Figure 5, provided that the circuit operates as a stand-alone buffer and constitutes a part of a modular adder when the terminals of the amplifier are connected with corresponding terminals of other alike buffers.

Preferably, the resistors have a relatively high resistance in order to prevent the parallel of the resistors of all the buffers to have an excessively small value such that the operational amplifier will not function correctly.

As it will be evident to the skilled person, different architectures of the voltage buffer are possible, provided that they have an operational amplifier, a feedback resistor and another resistor for coupling an input of the amplifier to a node at a voltage to be summed.

Preferably, the adder HB25 of each module is composed of an auxiliary adder, as that of Fig. 4, for generating a partial weighted sum SQMX with a certain scale factor $1/2^{m-1}$ of a certain number of components $2^m$ of even or odd components of an entanglement vector, and a voltage buffer, as that depicted in Figure 5, input with the voltage signal representative of the weighted sum SQMX. This configuration is particularly convenient, because it allows to generate a weighted sum SQ of $2^{m+k}$ components, by connecting $2^k$ modules in parallel.

Figure 6 dhows how two adders HB25 for $n$=3 qubits may be connected to realize a section I-b suitable for the case of $n$=4 qubits.

Finally, an array of adders I-c (see Figure 3) generates the signals A1, ..., A8 representative of the odd (or even) components of an output vector, by subtracting the components Q1, ..., Q8 from the scaled sum SQ.

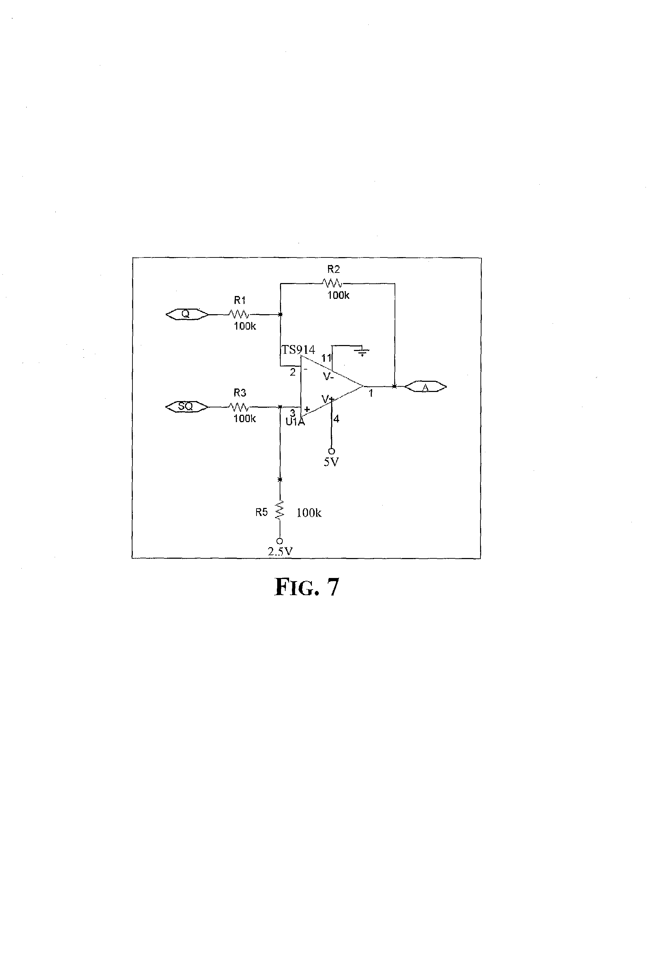

For example, the adders of section I-c may be realized for example as depicted in Figure 7.

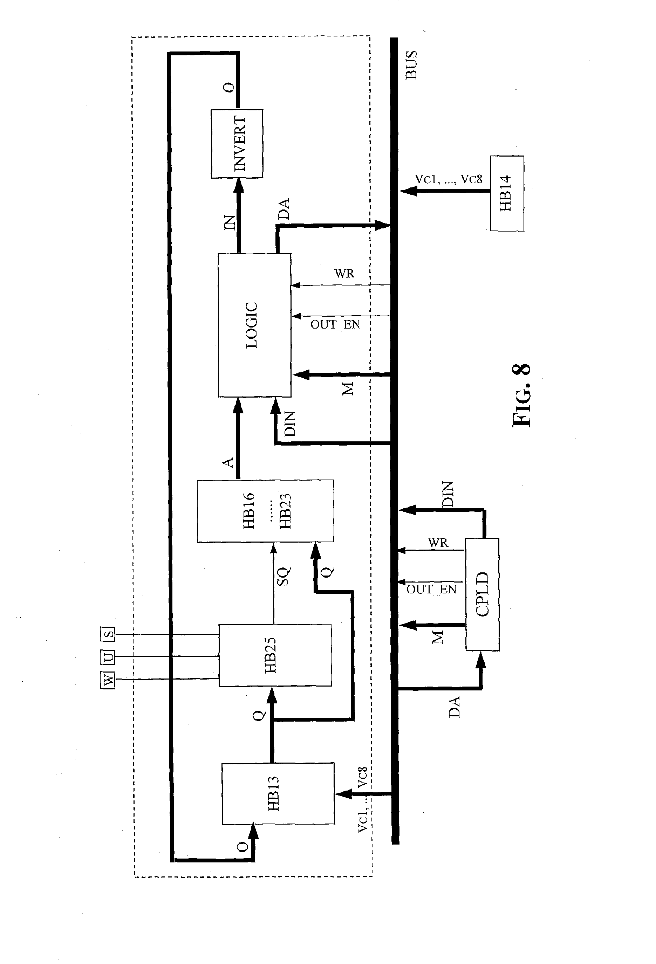

A basic scheme of a module of a quantum gate of this invention is depicted in the dashed rectangle of Fig. 8.

Each module substantially comprises an adder HB25 generating the signal SQ, that can be coupled with the adders of the other modules by connecting in common the pins W, U and S, an array of adders HB16, ..., HB23 generating components of an interference vector A, a digital circuit LOGIC and an inverting circuit INVERT.

Preferably, each module comprises also a subgroup HB13 of the aforementioned array of multiplexers I-a of the entanglement subsystem. The logic command signals Vc1 ..., Vc8, encoding the values of the binary function $f(.)$ to be processed with the Grover's algorithm, are sent to each subgroup of multiplexers HB13 of the modules through the internal bus BUS.

The digital circuit LOGIC, belonging to the digital Part II of the quantum gate of this invention, generates odd (or even) components of an output vector IN from the respective components of the interference vector A and communicates through the internal bus BUS with a microprocessor unit CPLD.

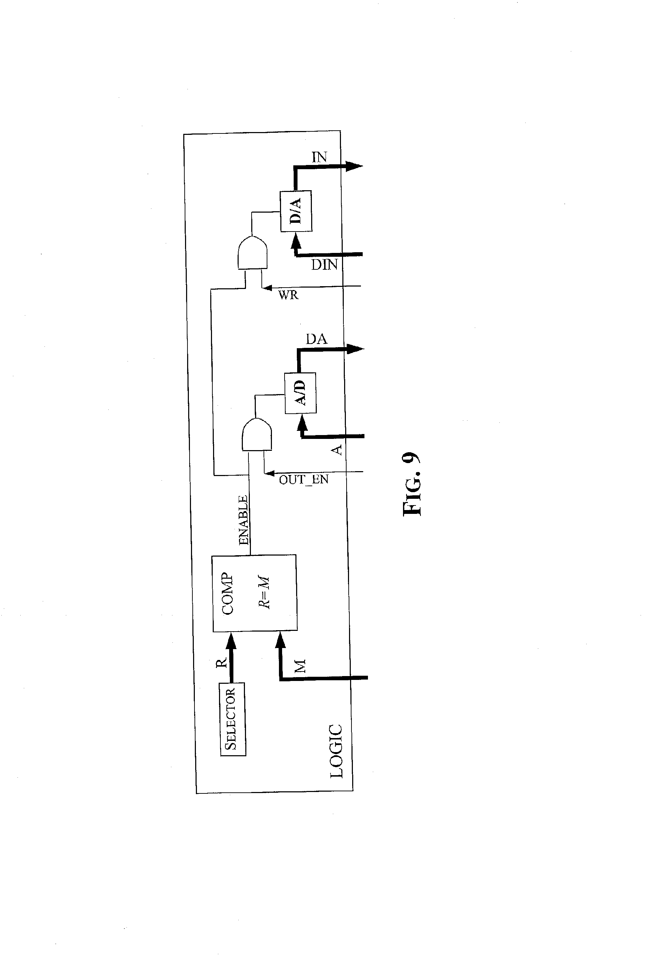

In order to better understand the functioning of the digital circuit LOGIC, let us refer to the more detailed diagram of Fig. 9.

The circuit LOGIC comprises an identification circuit SELECTOR that generates a relative identification bit string R and a comparator COMP that compares the strings M and R. When the two strings are equal, the comparator switches active the flag ENABLE, indicating that the microprocessor unit CPLD has selected the module for exchanging data with it through the internal bus BUS.

The microprocessor unit CPLD performs different types of operations (storing values, evaluating entropy and stopping iteration) in executing a Grover's algorithm. For evaluating the entropy S of the interference vector A, the microprocessor unit CPLD switches active a first logic signal OUT_EN, thus allowing the A/D converter of the selected module to generate a digital string DA representative of the components of output vector A, calculated by the selected module.

An analog/digital converter, which for example may be the commercial device ADC0808 of National Semiconductor, receives signals representing the components A1, ..., A8 of the output vector A and produces a corresponding binary string DA. The microprocessor unit that may be for example the commercial device XC95288XL of Xilinx, receives this string and calculates the Shannon entropy. If the Shannon entropy is greater than a pre-established value S, the microprocessor CLPD commands a new iteration of the Grover's algorithm by providing a second logic signal WR that makes the D/A converter generate the analog signals IN, representing components of the last calculated interference vector, from the digital string DIN output by the microprocessor CPLD.

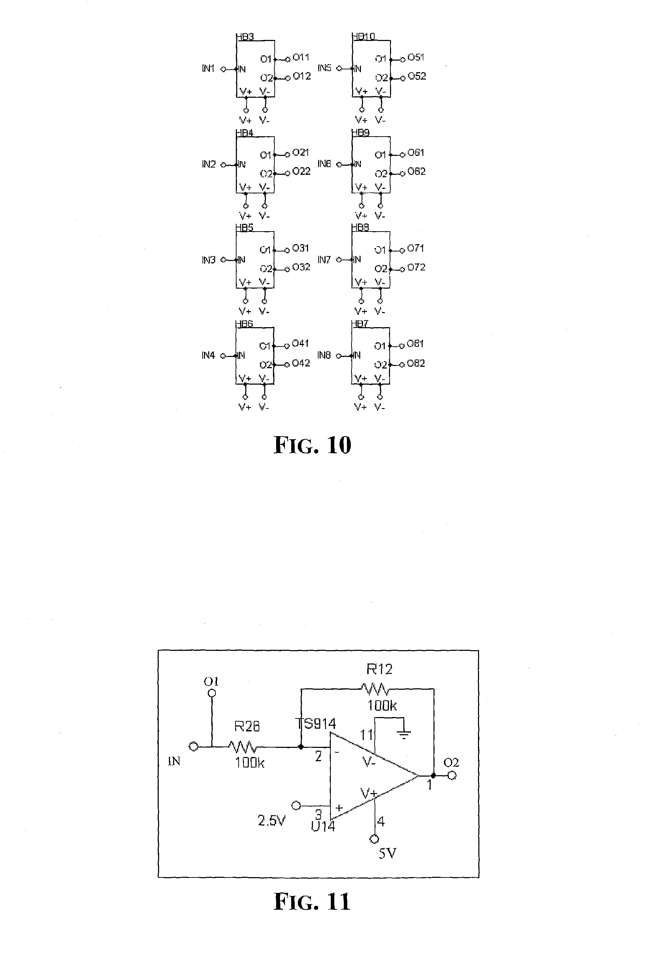

The inverting circuit INVERT of Fig. 8 is depicted in detail in Fig. 10. Substantially, it is composed of an array of inverters HB3, ..., HB10, which may be realized as shown in Figure 11, that generates all the components O11, ..., 082 of a new superposition vector to be processed from the odd components IN1, ..., IN8.

Basically, the microprocessor unit performs the following functions:

1) drives correctly the converters;

2) acquires digital values and evaluates the Shannon entropy S;

3) compares S with a fixed threshold;

4) if S<threshold, it stops iterations and sends the results to a LED Matrix display, otherwise it sends them (DIN) to a digital/analog converter;

5) provides for an initial condition of superposed basis vectors.

A display may also be connected to the CPLD for displaying results. If the Shannon entropy is not sufficiently small, the binary string has to be re-converted in an analog signal by a digital/analog converter in order to feed it back into the entanglement subsystem I-a. In the embodiment of Figure 8, the digital/analog converter was the commercial device AD7228 of Analog Devices.

**Claims**

1. A quantum gate for carrying out a Grover's quantum algorithm using a certain binary function ($f$) defined on a space having a vector basis of $n$ qubits, comprising

   a superposition subsystem carrying out a superposition operation on components of input vectors for generating components (O11, O12; ...; O81, O82) of superposition vectors on a second vector basis of $n$+1 qubits,
   an entanglement subsystem carrying out an entanglement operation on components of said linear superposition vectors for generating components (Q1, ..., Q8) of entanglement vectors, and
   an interference subsystem carrying out an interference operation on components of said entanglement vectors for generating components of output vectors, comprising
   at least an adder (HB25), input with signals representative of even or odd components of an entanglement vector (Q1, ..., Q8), generating a sum signal (SQ) representative of a weighted sum with a scale factor ($1/2^{n-1}$) of said even or odd components;
   an array of adders (HB16, ..., HB23), each input with a respective signal representing an even or odd component, respectively, of an entanglement vector (Q1, ..., Q8) and with said sum signal (SQ) and generating, as the difference between said sum signal (SQ) and a signal representing an even or odd component of an entanglement vector (Q1, ..., Q8), a signal representing, an even or odd component, respectively, of an output vector (A1, ..., A8).

2. The quantum gate of claim 1, comprising a processing subsystem having

   at least an analog/digital converter (A/D), input with said signals representing even or odd components of an output vector (A1, ..., A8) for converting said signals in a digital string (DA1, ..., DA8);
   a microprocessor unit (CPLD) input with said digital string (DA1, ..., DA8) for calculating a parameter to be made smaller than a certain threshold value (S) of said digital string of said converted components of the output vector (A1, ..., A8),
   comparing said parameter (S) to be minimized with said threshold value for stopping the Grover's algorithm or commanding a furhter iteration thereof depending on whether said parameter (S) is smaller than said threshold value or not, respectively,
   outputing a digital string (DIN) with said reduced parameter (S) representing components of said output vector;
   at least a digital/analog converter (D/A) input with said digital string of reduced parameter (S) (DIN) for generating output signals (IN1, ..., IN8) corresponding to even or odd components of an output vector;
   an array of inverters, each input with a respective output signal (IN1, ..., IN8) of said digital/analog converter D/A and generating a pair of signals of a certain voltage swing, representing opposite components (O11, O12; ...; O81, O82) of a new superposition vector that is input to said entanglement subsystem.

3. The quantum gate of claim 2, wherein
   said analog/digital converter (A/D) is the commercial device ADC0808;
   said microprocessor unit (CPLD) is the commercial device XC95288XL; and
   said digital/analog converter (D/A) is the commercial device AD7228.

4. The quantum gate of claim 2, wherein said parameter (S) to be reduced is the Shannon entropy.

5. The quantum gate of claim 2, wherein said quantum gate has a modular architecture and comprises

an internal bus (BUS) for exchanging data among modules of said architecture and said microprocessor unit;
the microprocessor unit (CPLD) generating addresses (M) of the modules to be enabled to send to or receive data from said microprocessor on said bus, and logic signals first (OUT_EN) and second (WR) for enabling said analog/digital (A/D) and digital/analog converters (D/A), respectively;
one or more modules coupled to said internal bus (BUS), comprising a respective subgroup of said array of inverters (INVERT) and of said array of adders (HB16, ..., HB23);
an identification circuit ($_{SELECTOR}$) generating a relative bit string (R) that identifies a selected module;
a comparator input with the bit string (R) of the module and with said address (M), generating a flag (ENABLE) that enables the module to exchange data with said microprocessor if the received address (M) matches with the bit string (R) of the module, otherwise sets the module in a tristate condition;
said analog/digital converter (A/D) being enabled by the logic AND between said flag (ENABLE) and said first logic signal (OUT_EN);
said digital/analog converter (D/A) being enabled by the logic AND between said flag (ENABLE) and said second logic signal (WR);
each of said adders (HB25) including a voltage buffer composed of an operational amplifier with an input connected by a resistor to a node at a respective input voltage ($SQ_{MX}$) of the buffer and at least a feedback resistor connected between an input and an output of the amplifier, outputting said sum signal (SQ), corresponding inputs and outputs of the operational amplifiers of the voltage buffers of the modules being connected in common.

6. The quantum gate of claim 5, wherein each voltage buffer comprises a first voltage divider with a certain ratio composed of a pair of resistors, a

first terminal node of which is coupled to a reference voltage and a second terminal node of which is coupled to the respective input voltage ($SQ_{MX}$) of the buffer;

a second voltage divider with the same ratio composed of another pair of resistors, a first terminal node of which is coupled to said reference voltage and a second terminal node of which is coupled to the output node of the operational amplifier;

said operational amplifier having a first input connected to the intermediate node of said first voltage divider and a second input connected to the intermediate node of said second voltage divider.

7. The quantum gate of claim 6, wherein each of said voltage dividers is composed of an identical pair of resistors.

8. The quantum gate of claim 5, wherein said input voltage ($SQ_{MX}$) of the buffer is a voltage representing a respective even or odd component of an entanglement vector (Q1, ..., Q8).

9. The quantum gate of claim 5, wherein said adder (HB25) of each module comprises also an auxiliary adder generating a respective partial sum signal representing a weighted sum of a respective pre-established number of even or odd components of said entanglement vector (Q1, ..., Q8) that is input to the respective buffer.

10. The quantum gate of claim 5, wherein said entanglement subsystem is constituted by

a command circuit (HB14) generating a number ($2^n$) of logic command signals (Vc1 ..., Vc8) encoding the values of said binary function ($f$) in correspondence of the vectors of the first basis;
an array of multiplexers (I-a), each driven by a respective logic command signal (Vc1 ..., Vc8) and input with a pair of signals (O11, O12; ...; O81, O82) representing components of a linear superposition vector that are referred to vectors of said second basis having the first n qubits in common, and outputting, for each superposition vector (O11, ..., O82), corresponding signals representing components of an entanglement vector (Q1, ..., Q8), each component (Q1, ..., Q8)
referring to a respective vector of the second basis being equal to the corresponding component of the respective superposition vector, if said binary function ($f$) is null in correspondence of the vector of the first basis constituted by the first $n$ qubits of said respective vector of the second basis, or
the opposite of the corresponding component of the respective superposition vector, if said binary function ($f$) is non null in correspondence of the vector of the first basis constituted by the first $n$ qubits of said respective vector of the second basis;
each module comprising a respective subgroup (HB13) of said array of multiplexers (I-a) input with the components (O11, ..., O82) generated by said respective subgroup of said array of inverters (INVERT).

11. The quantum gate of claim 5, wherein said modules are identical to each other.

**12.** A method of carrying out an interference operation of a Grover's quantum algorithm, comprising the steps of
calculating a weighted sum (SQ) with a certain scale factor ($1/2^{n-1}$) of even or odd components of an entanglement vector (Q1, ..., Q8);
generating each even or odd component of an output vector by subtracting from said weighted sum corresponding even or odd components, respectively, of an entanglement vector (Q1, ..., Q8).

**13.** The method of claim 12, comprising the steps of
calculating a number ($2^{n-m}$) of partial weighted sums ($SQ_M1$, $SQ_M2$), with a second scale factor ($1/2^{m-1}$), of a certain number ($2^m$) of even or odd components of an entanglement vector (Q1, ..., Q8);
calculating said weighted sum (SQ) by summing said partial weighted sums ($SQ_M1$, $SQ_M2$) with a second scale factor ($1/2^{n-m}$).

FIG. 1

FIG. 2A

FIG. 2B

**FIG. 3**

**FIG. 4**

**FIG. 5**

**FIG. 6**

**FIG. 7**

15

FIG. 8

FIG. 9

**FIG. 10**

**FIG. 11**

**European Patent Office**

## EUROPEAN SEARCH REPORT

Application Number

EP 03 42 5080

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | MIQUEL C ET AL: "Factoring in a dissipative quantum computer" PHYSICAL REVIEW, A. GENERAL PHYSICS, AMERICAN INSTITUTE OF PHYSICS. NEW YORK, US, vol. 54, no. 4, October 1996 (1996-10), pages 2605-2613, XP002181469 ISSN: 1050-2947 * page 2607, left-hand column, line 28 - page 2610, right-hand column, line 28; figures 1-6 * | 1,12 | G06N1/00 |
| A | HIOE W ET AL: "A SINGLE FLUX QUANTUM LOGIC GATE WITH HIGH FUNCTIONALITY" SUPERCONDUCTOR SCIENCE AND TECHNOLOGY, IOP PUBLISHING, TECHNO HOUSE, BRISTOL, GB, vol. 4, no. 11, 1 November 1991 (1991-11-01), pages 658-661, XP000561158 ISSN: 0953-2048 * page 659, right-hand column, line 1 - line 27; figure 3 * | 1,12 | |
| A | WO 01 67186 A (ST MICROELECTRONICS SRL ;AMATO PAOLO (IT); GHISI FABIO (IT); PORTO) 13 September 2001 (2001-09-13) * page 11, line 22 - page 39, line 4 * * page 46, line 20 - page 50, line 12; figures 3-14,22-31 * | 1,12 | |

TECHNICAL FIELDS SEARCHED (Int.Cl.7)

G06N

-/--

The present search report has been drawn up for all claims

| Place of search | Date of completion of the search | Examiner |
|---|---|---|
| The Hague | 14 November 2003 | Schenkels, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

## EUROPEAN SEARCH REPORT

Application Number

EP 03 42 5080

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | VEDRAL V ET AL: "BASIC OF QUANTUM COMPUTATION" PROGRESS IN QUANTUM ELECTRONICS, PERGAMON PRESS, OXFORD, GB, vol. 22, February 1998 (1998-02), pages 1-39, XP000937713 ISSN: 0079-6727 * page 6, line 1 - page 17, line 29; figures 4-9 * | 1,12 | |
| A | EP 1 083 520 A (YAMAHA MOTOR CO LTD) 14 March 2001 (2001-03-14) * page 8, line 2 - page 33, line 18; figures 4-15 * | 1,12 | |

TECHNICAL FIELDS SEARCHED (Int.Cl.7)

The present search report has been drawn up for all claims

| Place of search | Date of completion of the search | Examiner |
|---|---|---|
| The Hague | 14 November 2003 | Schenkels, P |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

## ANNEX TO THE EUROPEAN SEARCH REPORT
## ON EUROPEAN PATENT APPLICATION NO.

EP 03 42 5080

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2003

| Patent document cited in search report | | Publication date | Patent family member(s) | | Publication date |
|---|---|---|---|---|---|
| WO 0167186 | A | 13-09-2001 | WO | 0167186 A1 | 13-09-2001 |
| | | | EP | 1190278 A1 | 27-03-2002 |
| | | | JP | 2003526855 T | 09-09-2003 |
| EP 1083520 | A | 14-03-2001 | EP | 1083520 A2 | 14-03-2001 |
| | | | US | 6578018 B1 | 10-06-2003 |

EPO FORM P0459

For more details about this annex : see Official Journal of the European Patent Office, No. 12/82